# EUROPÄISCHE PATENTSCHRIFT

(11) **EP 2 328 266 B1**
(45) Veröffentlichungstag und Bekanntmachung des Hinweises auf die Patenterteilung: **14.12.2016**
(21) Anmeldenummer: 09401026.1
(22) Anmeldetag: 28.10.2009
(51) Int. Cl.: H02P 6/182, H02P 25/03, D06F 37/30

(54) **Verfahren zum Betreiben eines 2-phasigen oder mehrphasigen elektrischen Motors in einer Waschmaschine, Frequenzumrichter und mechatronisches System.**
Method for operating a two-phase or multiple phase electric motor in a washing machine, frequency converter and mechatronic system
Procédé de fonctionnement d'un moteur électrique biphasé ou multiphasé dans un lave-linge, commutateur de fréquence et système mécatronique

(43) Veröffentlichungstag der Anmeldung: 01.06.2011
(73) Patentinhaber: Miele & Cie. KG, 33332 Gütersloh (DE)
(72) Erfinder: Sammoud, Hafedh, 8090 Kelibia (TN)

(56) Entgegenhaltungen:
- US-A- 4 540 921
- US-A- 6 041 625
- US-E1- R E37 360

## Beschreibung

Die Erfindung betrifft ein Verfahren zum Betreiben eines 2-phasigen oder mehrphasigen elektrischen Motors zum Antreiben einer Trommel in einer Waschmaschine oder in einem Trockner, dessen Stator-Wicklungsstränge mittels eines Frequenzumrichters oder einer elektronischen Kommutierungsvorrichtung, umfassend einen Wechselrichter mit gesteuerten Halbbrücken, die aus einem Gleichspannungszwischenkreis gespeist werden, bestromt werden, wobei die Drehzahl und die Lage des Rotors mittels einer Erfassungseinrichtung erfasst wird, um die einzelnen Wicklungen abhängig von den erfassten Werten anzusteuern bzw. zu bestromen.

Zum Antreiben einer Trommel mit horizontaler oder geneigter Drehachse in einer Waschmaschine werden elektronisch kommutierte Motoren oder Synchronmotoren verwendet, die mit einem Frequenzumrichter bestromt werden. Um eine vorgegebene Drehbewegung bereitzustellen, ist es bekannt, einen Lagesensor zur Lageerfassung des Rotors zu verwenden, damit ein optimales Anlaufen aus der Ruhelage der Trommel bereitgestellt werden kann. Wenn die Ruhelage nach dem Abschalten des Motors, wie es bei den Drehzyklen während des Waschens vorkommt, nicht bekannt ist, entsteht beim Rotor nach dem erneuten Bestromen eine kurzzeitige Ruckbewegung, bis der synchrone Lauf wieder eingestellt ist. Insbesondere bei sensorlosen Bestromungsverfahren kommt dies vor, da die Lage- und Drehzahlsensierung nur während der aktivierten Bestromung der einzelnen Phasen erfolgt.

Eine derartiges Verfahren ist aus der DE 10 2006 047 206 A1 bekannt. Hier wird dem Motor bzw. den Wicklungen des Motors eine Wechselspannung zugeführt, die einen Stromverlauf aufgrund der magnetischen Eigenschaften der Statorwicklung im Zusammenspiel mit dem bewegten Rotor bewirkt. Anhand des dem Motor zugeführten Spannungsverlaufs und dem daraus resultierenden Stromverlauf wird die Rotorposition geschätzt. Anhand dieser Werte werden Korrekturwerte ermittelt und berechnet, um eine Anpassung des dem Motor zugeführten Spannungsverlaufs vorzunehmen und einen synchronen Lauf zu erzeugen. Wie bereits oben erwähnt, ist dieses sensorlose Verfahren zum Betreiben eines elektrischen Motors nur im laufenden Betrieb möglich, da beim Stillstand dem Motor keine Spannung zugeführt wir und somit kein daraus resultierender Strom für die Erfassung entsteht. Die Rotorlage bei abgeschaltetem Motor kann nicht bzw. zumindest nicht genau erfasst werden, wenn bei einer Waschmaschine die Trommel nach dem Abschalten des Motors noch etwas weiterdreht, das sogenannte Austrudeln.

Aus der US 4 540 921 A ist ein Verfahren zum Betreiben eines Motors eines Waschmaschinenantriebs bekannt, bei dem die Wicklungen der Statorpole mittels einer elektronischen Kommutierungsvorrichtung bestromt werden. Die Spannungen der Wicklungsstufen werden in digitalisierter Form erfasst, wenn den Windungen kein Strom zugeführt wird.

Aus der US RE 37 360 E1 ist ein Verfahren zum Betreiben eines Rührwerks für eine Waschmaschine bekannt. Hierbei wird der Motor zum Antrieb des Rührwerks mittels einer elektronischen Kommutierungsvorrichtung bestromt. Um ein gleichmäßiges hin-und HerBewegen des Rührwerks ohne Unterbrechungen bereitzustellen, wird nach dem Abschalten während des Auslaufen des Motors die Position des Rotors ermittelt, bei dem eine Kommutierung zur Bewegung des Rührwerks Gegenrichtung aktiviert werden kann.

Aus der US 6 041 625 A ist ein Verfahren zum Betreiben eines Rührwerks für eine Waschmaschine bekannt, bei dem der Motor sinusförmig bestromt wird. Zur Erfassung der Rotorlage wird ein Hall-Sensor eingesetzt, um abhängig von der erfassten Position eine synchrone Bestromung zu bewirken.

Der Erfindung liegt somit die Aufgabe zugrunde, auf einfache Weise einen elektrischen Motor für den Trommelantrieb einer Waschmaschine anzusteuern, bei dem auf eine Lagesensierung verzichtet werden kann.

Diese Aufgabe wird durch ein Verfahren mit den Merkmalen von Anspruch 1 und durch einen Frequenzumrichter mit den Merkmalen von Anspruch 4 sowie durch ein mechatronisches System gemäß Anspruch 11 und durch eine Waschmaschine mit den Merkmalen von Anspruch 12 und 13 gelöst. Vorteilhafte Weiterbildungen ergeben sich aus den jeweiligen abhängigen Ansprüchen.

Die mit der Erfindung erreichbaren Vorteile bestehen darin, dass der Rotor des Motors stets in der richtigen, vorgegebenen Richtung anläuft und dass kein Ausrichten des Motors notwendig ist. Die kurzzeitige, ruckartige Drehbewegung, die durch das Ausrichten normalerweise entsteht, wird vermieden.

Zur Lösung wird ein Verfahren vorgeschlagen, die Ruhelage des Rotors bei stromlosem Motor mittels der Erfassungseinrichtung zu erfassen und zu speichern, so dass dieser Positionswert für die Bestromung des Motors beim Start des nachfolgenden Drehzyklus' verwendet wird. Für die Sensierung werden die magnetischen Eigenschaften des Motors ausgenutzt, so dass keine Sensoren, wie Lagesensoren, notwendig sind. Es handelt sich hierbei um eine sensorlose Positionserfassung des Rotors. Als stromlos wird hier die

Unterbrechung der Versorgung, das Abschalten der Wicklungsstränge oder der gesteuerte Auslauf des Motors bis zum endgültigen Ruhezustand verstanden.

Aufgrund der Erfassung der Rotorlage während der Motor nicht bestromt wird, ist die Bestromung des nachfolgenden Drehzyklus' derart ausgebildet, dass zumindest ein nahezu ruckfreier Anlauf des Motors in die vorbestimmte Drehrichtung erfolgt. Damit können die von der Programmsteuerung der Waschmaschine vorgegebenen Drehbewegungen optimal ausgeführt werden, unnötiges Ruckeln wird vermieden. Auch der Energieverbrauch wird gegenüber einem gebremsten oder in einem Haltezustand gehaltenen Motor vermindert.

In einer Weiterbildung wird die Ruhelage des abgeschalteten Motors kontinuierlich erfasst und gespeichert. Als kontinuierlich wird hier auch die zyklische Erfassung und Speicherung angesehen, wobei die zeitlichen Abstände zwischen den Erfassungen derart klein gewählt sind, dass eine Verfälschung der erfassten Position sich kaum auf den Anlauf auswirkt. Somit werden noch Drehbewegungen des Motors erfasst, die aufgrund einer von Außen bewirkten Trommelbewegung verursacht werden.

Insgesamt ist es zweckmäßig, nach dem Start des nachfolgenden Drehzyklus die zuvor gespeicherte Ruhelage des Rotors zu verwerfen, so dass nach dem erneuten Abschalten des Motors die Ruhelage erneut erfasst und gespeichert werden muss. Somit ist sicher gestellt, dass bei unterschiedlich langem Austrudeln der Trommel nach abgeschaltetem Motor die jeweils richtige Stillstandsposition oder Ruhelage erfasst und gespeichert wird.

Es wird die elektromagnetische Wirkung, die bei der Bewegung des Rotors entsteht, als Signal für die Erfassung der Drehzahl und Lage des Rotors verwendet. Dies ist bei Motoren mit permanentmagneterregtem Rotor vorteilhaft, weil die sogenannte EMK (elektromagnetische Kraft) bei fremdbewegtem Rotor in den Stator-Wicklungen ein Spannungssignal induziert, das sehr einfach und zuverlässig erfasst werden kann. Die Spannungsmessung ist auch bei kleinen Drehzahlen bis ca. 1/min sichergestellt, wobei die endgültige Stillstandsposition anhand der vorab erfassten dynamischen Winkeländerung des Rotors geschätzt und als Ruhelage oder Stillstandsposition abgespeichert wird.

Die Erfindung betrifft ferner einen Frequenzumrichter oder eine elektronische Kommutierungsvorrichtung zum Betreiben eines 2-phasigen oder mehrphasigen elektrischen Motors, zum Antreiben einer Trommel in einer Waschmaschine, zum Bestromen der Stator-Wicklungen des Motors, umfassend einen Wechselrichter mit gesteuerten Halbbrücken, die aus einem Gleichspannungszwischenkreis gespeist werden können, einer Erfassungseinrichtung zur Erfassung der Drehzahl und der Lage des Rotors bei abgeschaltetem Motor, und einer Mikroprozessorsteuerung, die dazu ausgebildet ist, die Halbbrücken abhängig von den erfassten Werten anzusteuern, um die einzelnen Wicklungen für den Betrieb des Motors zu bestromen. Um einen sanften Anlauf und ruckfreien Betrieb der Trommel bereitzustellen, ist die Mikroprozessorsteuerung dazu eingerichtet, die Ruhelage des Rotors bei abgeschaltetem Motors mittels der Erfassungseinrichtung zu speichern und beim Start des nächsten Drehzyklus für die Ansteuerung der Halbbrücken zu berücksichtigen.

In einer vorteilhaften Ausführung umfasst die Erfassungseinrichtung einen Spannungsteiler, der die Spannung jeder einzelnen Phase auf ein zu messendes Eingangspotential eines AD-Wandlers (Analog-Digital-Wandlers) herabsetzt und ein gemeinsames Bezugspotential mit dem Gleichspannungszwischenkreis bildet. Dadurch sind aufwändige Schaltungsteile, wie Operationsverstärker zur Signalkonvertierung oder Verstärkung nicht notwendig, wodurch die gesamte Schaltungsanordnung recht kostengünstig, robust und störsicher wird.

In einer vorteilhaften Weiterbildung ist der Spannungsteiler für einen Bruchteil der maximal auftretenden Spannung an einem Wicklungsstrang konfiguriert. Dadurch können ist der Spannungsteiler für kleine Spannungswerte an Wicklungssträngen optimal ausgelegt, da bei kleinen Drehzahlen bzw. beim langsamen Auslaufen auch nur sehr kleine Spannungen durch die EMK erzeugt werden. Der Spannungsteiler ist zweckmäßigerweise für etwal/100 bis ¼ der maximalen möglichen Spannung dimensioniert.

In einer zweckmäßigen Weiterbildung umfasst die Erfassungseinrichtung eine Vorrichtung zur Transformation der erfassten Spannungssignale, um die zu einem Datensatz transformierten Signale einer nachgeschalteten Vorrichtung zur Schätzung der Drehzahl und des Winkels des Rotors bereitzustellen, wobei die Einrichtung dazu eingerichtet ist, den Ruhezustand und die Ruhelage zu erfassen. Durch diese in Funktionsblöcke aufgeteilte Erfassungseinrichtung ist ein schnelles und sicheres Erfassen der Spannungssignale möglich, weil die unterschiedlichen Rechenoperationen und Vergleichsoperationen quasi gleichzeitig und ohne Rückwirkung aus einer anderen Operation durchgeführt werden.

Zur Bereitstellung einer sehr einfachen Erfassungseinrichtung ist die Mikroprozessoreinrichtung zur Bereitstellung der Vorrichtung zur Transformation und zur Schätzung der Drehzahl und des Rotorwinkels bestimmt. Dadurch wird die ohnehin vorhandene Mikroprozessoreinrichtung für die Erfassungsaufgaben verwendet, so dass auf zusätzliche Bauteile verzichtet werden kann.

Die Erfindung betrifft ferner ein mechatronisches System, bestehend aus einem BLPM-Motor und einem Frequenzumrichter nach einem der Ansprüche 6 bis 10 zum Betreiben des BLPM-Motors. Damit ist sichergestellt, dass die von einer Programmsteuerung vorgegebenen Befehle für die Drehbewegung des Motors optimal und zielgenau umgesetzt werden können. Unnötiges Ruckeln, das Schäden an der Wäsche oder vorzeitigen Verschleiß an den mechanischen Bauteilen verursachen kann, wird weitgehend vermieden.

Ein Ausführungsbeispiel der Erfindung ist in den Zeichnungen rein schematisch dargestellt und wird nachfolgend näher beschrieben. Es zeigen:
- Fig. 1: eine skizzierte Waschmaschine in einer Schnittdarstellung;
- Fig. 2:: eine Skizze des Frequenzumrichters;
- Fig. 3:: ein skizziertes Blockschaltbild der Erfassungseinrichtung und
- Fig. 4, 5:: Diagramme für die erfasste Drehzahl und die Winkellage des Rotors.

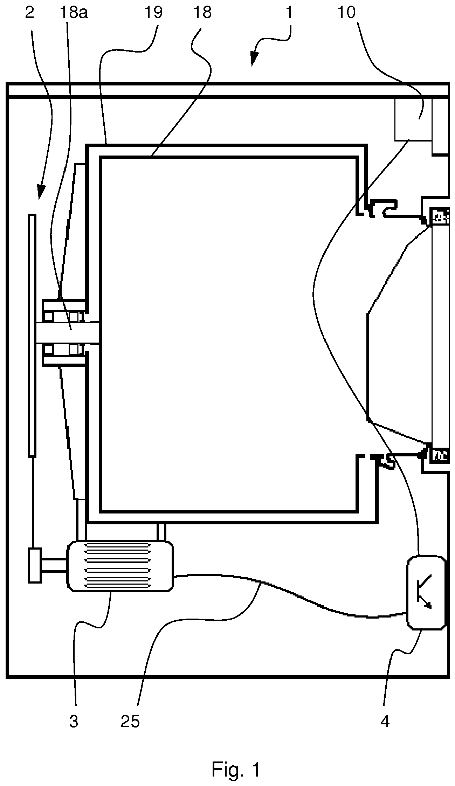

In Fig. 1 ist eine Waschmaschine 1 in einer Schnittdarstellung in der betriebsgemäßen Lage aufskizziert. Die Waschmaschine 1 umfasst einen Laugenbehälter 19, in dem eine im wesentlichen horizontal drehende Trommel 18 angeordnet ist. Die Trommel, wird mit Hilfe eines Motors 3 und eines Antriebssystems 2 angetrieben. Der Motor 3 wird durch einen Frequenzumrichter 4, angesteuert und ist mittels eines Kabels 25 an dem Frequenzumrichter 4 angeschlossen. In diesem Beispiel wird ein bürstenloser Synchronmotor, hier ein sogenannter bürstenloser Motor mit permanentmagneterregtem Rotor (BLPM) verwendet, wobei der Frequenzumrichter 4 die Leistung oder Bestromung für den Motor 3 bereitstellt. Die Steuerbefehle erhält der Frequenzumrichter 4 von der Programmsteuerung 10, die mittels einer Datenleitung 10a mit dem Frequenzumrichter 4 verbunden ist.

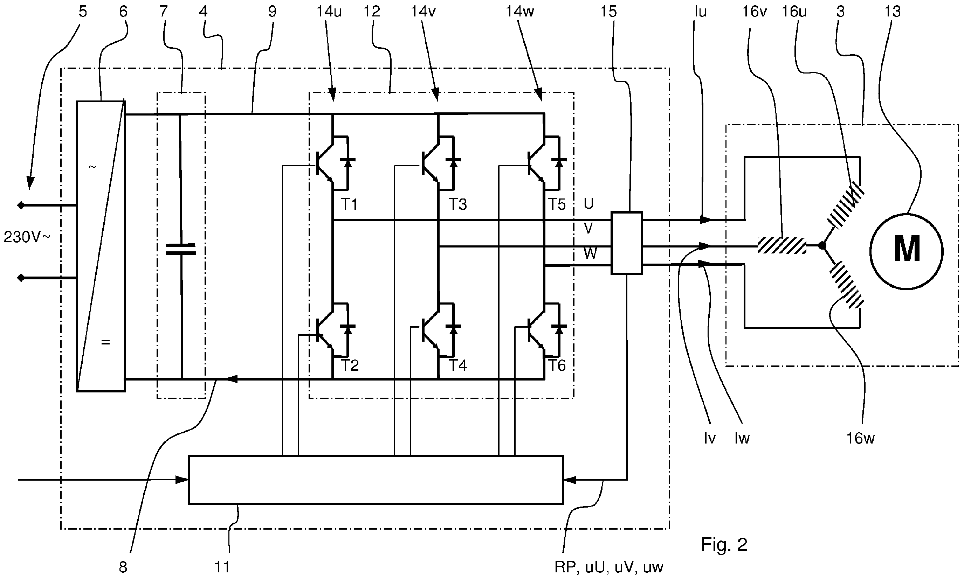

In der Fig. 2 ist die Anordnung des Frequenzumrichters 4 zur Bestromung des Motors 3 aufskizziert. Die angelegte Versorgungsspannung 5 (beispielsweise 230V∼) wird mit einem Gleichrichter 6 in eine Gleichspannung mit einem Pluspol 9 und einem Minuspol 8 gleichgerichtet. Die Gleichspannung im Gleichspannungszwischenkreis 7 liegt hierbei im Bereich von 230 V bis 325 V. Bei anderen Werten für die zugeführte Versorgungsspannung 5 würden sich entsprechend andere Werte für die gleichgerichtete Spannung im Gleichspannungszwischenkreis 7 einstellen. An dem Gleichspannungszwischenkreis 7 ist der Wechselrichter 12 angeschlossen, der für jede Phase U, V, W des Motors jeweils eine sogenannte Halbbrücke 14u, 14v, 14w besitzt. Die Halbbrücken 14u, 14v, 14w schalten mit Hilfe von Transistoren T1 bis T6 den Motorstrom in den Phasen U, V, W, wobei eine Pulsweitenmodulation verwendet wird, die zur Bereitstellung von sinusförmigen Strömen oder Gleichströmen in den Phasen U, V, W dient. Als Motor 3 wird in diesem Beispiel ein 3-Phasen Motor mit einer 3-strängigen Statorwicklung 16 verwendet, die sternförmig ausgeführt ist. Im Gleichspannungszwischenkreis 7 ist die Mikroprozessorsteuerung 11, die dazu ausgebildet ist, die Halbbrücken 14u, 14v, 14w abhängig von den erfassten Werten anzusteuern, um die einzelnen Wicklungen 16u, 16v, 16w für den Betrieb des Motors 3 zu bestromen. Der Frequenzumrichter umfasst ferner eine Erfassungseinrichtung 15, die die aufgrund der EMK-Eigenschaften des Motors induzierten Spannungssignale für die Bestimmung der Drehzahl und Position des Rotors 13 verwendet und das Ergebnis an die Mikroprozessorsteuerung 11 weiterleitet, damit sie aufgrund der erfassten Werte die Halbbrücken 14u, 14v, 14w entsprechend ansteuern kann. Die Erfassungseinrichtung 15 ist ferner dazu eingerichtet, die Ruhelage des Rotors 13 bei abgeschaltetem Motor 3 zu erfassen und zu speichern, so dass dieser gespeicherte Positionswert für die Ansteuerung der Halbbrücken 14u, 14v, 14w zur Bestromung des Motors beim Start des nachfolgenden Drehzyklus' verwendet bzw. berücksichtigt wird.

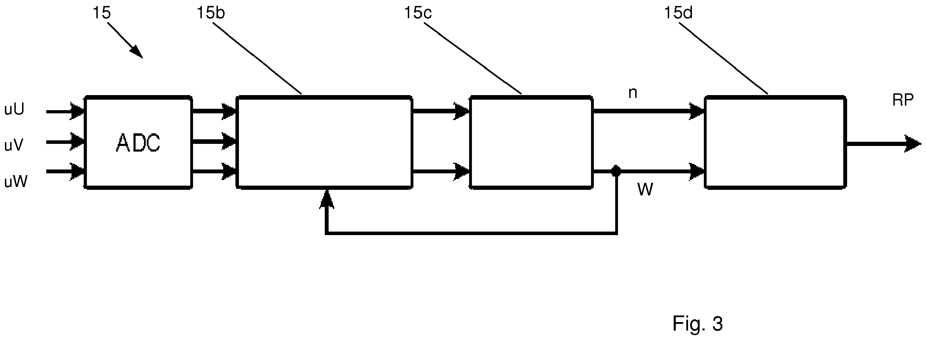

Zur Erfassung des Spannungssignals aus den Motorwicklungen bzw. den Wicklungssträngen 16u, 16v, 16w wird mit Hilfe eines Spannungsteilers, dessen Bezugspotential mit dem MinusPol 8 des Gleichspannungszwischenkreises 7 verbunden ist, das zu messende Signal einem ADC (Fig. 3) zugeführt. Wie in Fig. 3 weiter zu erkennen ist, umfasst die Erfassungseinrichtung 15 ferner eine Vorrichtung zur Transformation 15b der erfassten Spannungssignale, um die zu einem Datensatz transformierten Signale einer nachgeschalteten Vorrichtung zur Schätzung der Drehzahl 15c und des Winkels des Rotors 13 bereitzustellen. Der nachgeschaltete Ruhedetektor 15d erkennt, ob der Rotor 13 sich noch bewegt oder nicht, und sobald der Rotor 13 sich nicht mehr dreht, wird mittels des Ausgangssignals RP die Ruheposition der Mikroprozessorsteuerung 11 (Fig. 2) übermittelt. Die in Fig. 3 aufgeführten Blöcke können auch in der Mikroprozessorsteuerung 11 integriert sein, so dass die Funktion mit Hilfe eines entsprechenden Programms bereitgestellt wird. Die von den Wicklungen 16u, 16v, 16w induzierten Spannungen werden von einem Spannungsteiler (nicht dargestellt) in Spannungssignale uU, uV, uW umgewandelt und dem ADC zugeführt. Die danach als digital kodiertes Datum vorliegenden Signale können dann entsprechend digital weiterverarbeitet werden, beispielsweise mit einem Rechenwerk, einem Signalprozessor oder dem Prozessor der Mikroprozessorsteuerung 11 des Umrichters 4, um die Stillstandsposition RP des Rotors 13 zu bestimmen bzw. zu erfassen und zu speichern. Als Speicher kann ein nichtflüchtiger Speicher, beispielsweise ein Flash, verwendet werden, so dass die gespeicherte Ruheposition nach dem Abschalten des Gerätes nach dem erneuten Einschalten zur Verfügung steht.

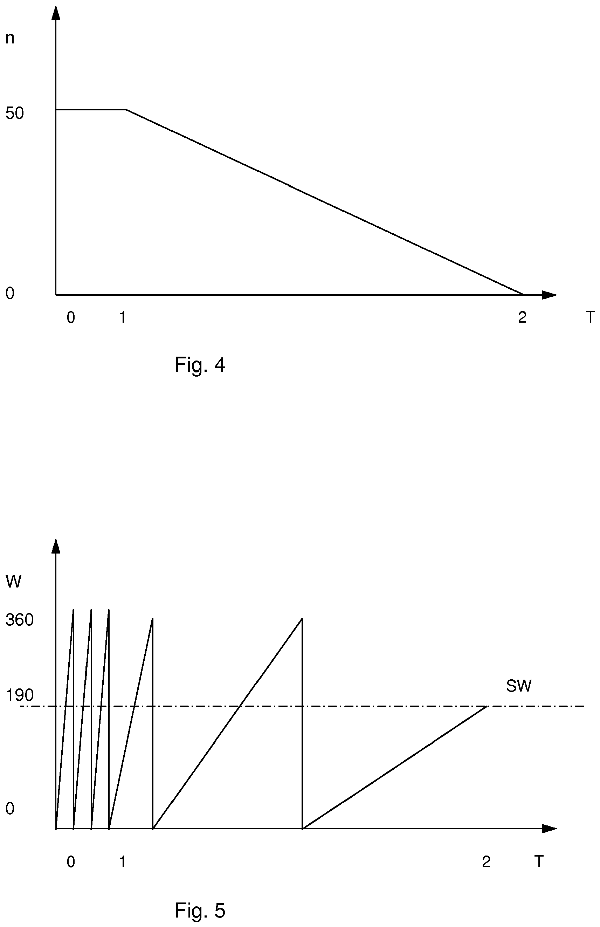

Fig. 5 zeigt den Drehzahlverlauf des Rotors 13 bei abgeschaltetem Motor 3. Hier ist ab dem Zeitpunkt T=1 ein Absinken der Drehzahl von 50 1/min auf 0 1/min skizziert. Fig. 6 zeigt entsprechend für die abfallende Drehzahl den Winkelverlauf. Zum Zeitpunkt T=2 steht der Rotor 13 und damit die Trommel 18 still, so dass der zuletzt erfasste bzw. geschätzte Winkel RW gespeichert wird. Das Verfahren zum Betreiben des Motors 3 eignet sich sowohl für einen Motor 3, der die Trommel 18 mittels eines Antriebssystems 2 mit einem Riemen antreibt als auch für einen als Direktantrieb konzipierten Motor, dessen Rotor 13 direkt mit der Trommelwelle 18a (Fig. 1) verbunden ist.

## Patentansprüche

1. Verfahren zum Betreiben eines 2-phasigen oder mehrphasigen elektrischen bürstenlosen Synchronmotors (3) mit permanentmagneterregtem Rotor (13), zum Antreiben einer Trommel (18) in einer Waschmaschine (1) oder eines Trockners, dessen Stator-Wicklungsstränge (16u, 16v, 16w) mittels eines Frequenzumrichters (4) oder einer elektronischen Kommutierungsvorrichtung, umfassend einen Wechselrichter (12) mit gesteuerten Halbbrücken (14u, 14v, 14w), die aus einem Gleichspannungszwischenkreis (7) gespeist werden, bestromt werden, wobei die Drehzahl und die Lage des Rotors (13) mittels einer Erfassungseinrichtung (15) erfasst wird, um die einzelnen Wicklungen (16u, 16v, 16w) abhängig von den erfassten Werten anzusteuern bzw. zu bestromen,
wobei mittels der Erfassungseinrichtung (15) die von den Stator-Wicklungen (16u, 16v, 16w) erzeugten Spannungssignale, die aufgrund der elektromagnetischen Wirkung bei der Bewegung des Rotors (13) entstehen, für die Bestimmung der Drehzahl und Lage des Rotors (13) verwendet werden und dieser gespeicherte Positionswert (RP) für die Ansteuerung der Halbbrücken (14u, 14v, 14w) zur Bereitstellung von Strömen zur Bestromung des Motors (3) beim Start des nachfolgenden Drehzyklus' verwenden wird, sodass zumindest ein nahezu ruckfreier Anlauf des Rotors (13) in eine vorbestimmte Drehrichtung erfolgt, **dadurch gekennzeichnet, dass** der Motor mittels Pulsweitenmodulation mit sinusförmigen Strömen bestromt wird und dass die endgültige Stillstandsposition des Rotors (13) anhand der vorab erfassten dynamischen Winkeländerung des Rotors (13) bei stromlosem Motor (3) geschätzt und als Ruhelage (RP) gespeichert und beim Start des nachfolgenden Drehzyklus' verwendet wird.

2. Verfahren nach Anspruch 1,
**dadurch gekennzeichnet,**
**dass** die Ruhelage (RP) des stromlosen Motors (3) kontinuierlich erfasst und gespeichert wird.

3. Verfahren nach Anspruch 1,
**dadurch gekennzeichnet,**
**dass** nach dem Start des nachfolgenden Drehzyklus die zuvor gespeicherte Ruhelage (RP) des Rotors (13) verworfen und nach einem erneuten Abschalten erneut erfasst und gespeichert wird.

4. Frequenzumrichter (4) zum Betreiben eines 2-phasigen oder mehrphasigen elektrischen bürstenlosen Synchronmotors (3) mit permanentmagneterregtem Rotor (13), zum Antreiben einer Trommel (18) in einer Waschmaschine oder in einem Trockner, zum Bestromen der Stator-Wicklungsstränge (16u, 16v, 16w) des Motors (3), umfassend einen Wechselrichter (12) mit gesteuerten Halbbrücken (14u, 14v, 14w), die aus einem Gleichspannungszwischenkreis (7) gespeist werden können, einer Erfassungseinrichtung (15) zur Erfassung der Drehzahl und der Lage des Rotors bei abgeschaltetem Motor, und einer Mikroprozessorsteuerung (11), die dazu ausgebildet ist, die Halbbrücken (14u, 14v, 14w) abhängig von den erfassten Werten anzusteuern, um die einzelnen Wicklungen (16u, 16v, 16w) für den Betrieb des Motors (3) zu bestromen,
wobei die Erfassungseinrichtung (15) dazu eingerichtet ist, anhand der aufgrund der elektromagnetischen Eigenschaften des Motors (3) induzierten Spannungssignale die Drehzahl und Position des Rotors (13) zu bestimmen und als Ergebnis an die Mikroprozessorsteuerung (11) weiterzuleiten, die dazu eingerichtet ist, diesen gespeicherten Positionswert (RP) für die Ansteuerung der Halbbrücken (14u, 14v, 14w) zur Bereitstellung von Strömen zur Bestromung des Motors (3) beim Start des nachfolgenden Drehzyklus' für einen zumindest nahezu ruckfreien Anlauf des Rotors (13) in eine vorbestimmte Drehrichtung zu verwenden, **dadurch gekennzeichnet, dass** der Motor mittels Pulsweitenmodulation mit sinusförmigen Motorströmen bestromt wird und die Mikroprozessorsteuerung (11) weiter dazu eingerichtet ist, die endgültige Stillstandsposition anhand der vorab erfassten dynamischen Winkeländerung des Rotors (13) bei stromlosem Motor (3) zu schätzen und als Ruhelage (RP) für den Start des nachfolgenden Drehzyklus' zu speichern.

5. Frequenzumrichter (4) nach Anspruch 4,
**dadurch gekennzeichnet,**
**dass** die Erfassungseinrichtung (15) einen Spannungsteiler umfasst, der die Spannung jeder einzelnen Phase (16u, 16v, 16w) auf ein zu messendes Eingangspotential eines AD-Wandlers herabsetzt und ein gemeinsames Bezugspotential mit dem Gleichspannungszwischenkreis (7) bildet.

6. Frequenzumrichter (4) nach Anspruch 5,
**dadurch gekennzeichnet,**
**dass** der Spannungsteiler für einen Bruchteil der maximal auftretenden Spannung an einem Wicklungsstrang (16u, 16v, 16w) konfiguriert ist.

7. Frequenzumrichter (4) nach einem der Ansprüche 4 bis 6,
**dadurch gekennzeichnet,**
**dass** die Erfassungseinrichtung (15) eine Vorrichtung zur Transformation der erfassten Spannungssignale (15b) umfasst, um die zu einem Datensatz transformierten Signale einer nachgeschalteten Vorrichtung (15c) zur Schätzung der Drehzahl und des Winkels des Rotors (13) bereitzustellen, wobei ferner ein Mittel (15d) dazu eingerichtet ist, den Ruhezustand und die Ruhelage (RP) des Rotors (13) zu erfassen.

8. Frequenzumrichter (4) nach Anspruch 7,
**dadurch gekennzeichnet,**
**dass** die Mikroprozessorsteuerung (11) zur Bereitstellung der Vorrichtung zur Transformation und die Vorrichtung zur Schätzung der Drehzahl (n) und des Rotorwinkels (W) eingerichtet ist.

9. Frequenzumrichter (4) nach Anspruch 4,
**gekennzeichnet durch**
einen nichtflüchtigen Speicher zum Abspeichern der Ruhelage (RP) des Rotors (13).

10. Frequenzumrichter (4) mit einer Mikroprozessorsteuerung (11), umfassend einen Programmspeicher, welches ein Programm zur Bereitstellung der Funktionen und Konfiguration des Frequenzumrichters (4) nach einem der Ansprüche 4 bis 9 enthält.

11. Mechatronisches System, bestehend aus einem bürstenlosen Synchronmotor (3) für sinusförmige Motorströme mit permanenterregtem Rotor und einem Frequenzumrichter (4) nach einem der Ansprüche 4 bis 10 zum Betreiben des Motors (3).

12. Waschmaschine (1) umfassend einen Laugenbehälter (19), in dem eine im wesentlichen horizontal drehende Trommel (18) angeordnet ist, die mit Hilfe eines elektrischen Motors (3) und eines Antriebssystems 2 mit einem Riemen angetrieben werden kann, wobei der Motor (3) ein bürstenloser Synchronmotor (3) für sinusförmige Motorströme mit permanentmagneterregtem Rotor (13) ist, der durch einen Frequenzumrichter (4) nach einem der Ansprüche 4 bis 10, angesteuert und bestromt wird und ein mechatronisches System nach Anspruch 11 bildet, wobei der Frequenzumrichter(4) mittels einer Datenleitung (10a) mit einer Programmsteuerung (10) verbunden ist, damit der Frequenzumrichter (4) Steuerbefehle von der Programmsteuerung (10) erhalten kann.

13. Waschmaschine (1) umfassend einen Laugenbehälter (19), in dem eine im wesentlichen horizontal drehende Trommel (18) angeordnet ist, die mit Hilfe eines als Direktantrieb konzipierten Motors (3), dessen Rotor direkt mit der Trommelwelle (18a) verbunden ist angetrieben werden kann, wobei der Motor (3) ein bürstenloser Synchronmotor (3) für sinusförmige Motorströme mit permanentmagneterregtem Rotor (13) ist, der durch einen Frequenzumrichter (4) nach einem der Ansprüche 4 bis 10, angesteuert und bestromt wird und ein mechatronisches System nach Anspruch 11 bildet, wobei der Frequenzumrichter(4) mittels einer Datenleitung (10a) mit einer Programmsteuerung (10) verbunden ist, damit der Frequenzumrichter (4) Steuerbefehle von der Programmsteuerung (10) erhalten kann.

## Claims

1. Method for operating a two-phase or multi-phase brushless synchronous electric motor (3) comprising a rotor (13) which is excited by permanent magnets and intended for driving a drum (18) in a washing machine (1) or a tumble dryer, the stator phase windings (16u, 16v, 16w) of which rotor are supplied with current by means of a frequency converter (4) or an electronic commutation device, comprising an inverter (12) having controlled half bridges (14u, 14v, 14w) which are powered by a direct current intermediate circuit (7), the rotational speed and the position of the rotor (13) being detected by means of a detection device (15) in order to actuate and supply current to the individual windings (16u, 16v, 16w) on the basis of the detected values, the voltage signals which are generated by the stator windings (16u, 16v, 16w) and result from the electromagnetic effect produced when the rotor (13) moves being used by the detection device (15) to determine the rotational speed and position of the rotor (13), and this recorded position value (RP) being used to actuate the half bridges (14u, 14v, 14w) to provide currents for supplying current to the motor (3) at the start of the subsequent rotational cycle, in such a way that the rotor (13) is started up in a predetermined direction of rotation in an at least virtually smooth manner, **characterised in that** the motor is supplied with sinusoidal currents by means of pulse-width modulation and **in that** the final standstill position of the rotor (13) is estimated from the previously detected dynamic angle change of the rotor (13) when the motor (3) is currentless, recorded as the rest position (RP) and used at the start of the subsequent rotational cycle.

2. Method according to claim 1,
**characterised in that** the rest position (RP) of the currentless motor (3) is continuously detected and recorded.

3. Method according to claim 1,
**characterised in that**, once the subsequent rotational cycle has started, the previously recorded rest position (RP) of the rotor (13) is discarded and detected and recorded again once the motor has been switched off once again.

4. Frequency converter (4) for operating a two-phase or multi-phase brushless synchronous electric motor (3) comprising a rotor (13) which is excited by permanent magnets and intended for driving a drum (18) in a washing machine (1) or in a tumble dryer, which frequency converter is intended for supplying current to the stator phase windings (16u, 16v, 16w) of the motor (3) and comprises an inverter (12) having controlled half bridges (14u, 14v, 14w) which can be powered by a direct current intermediate circuit (7), a detection device (15) for detecting the rotational speed and the position of the rotor when the motor is switched off, and a microprocessor controller (11) which is designed to actuate the half bridges (14u, 14v, 14w) on the basis of the detected values, in order to supply current to the individual windings (16u, 16v, 16w) for operating the motor (3), the detection device (15) being set up to determine the rotational speed and position of the rotor (13) on the basis of the voltage signals induced as a result of the electromagnetic properties of the motor (3) and to forward said rotational speed and position as a result to the microprocessor controller (11), which is set up to use this recorded position value (RP) to actuate the half bridges (14u, 14v, 14w) to provide currents for supplying current to the motor (3) at the start of the subsequent rotational cycle, in such a way that the rotor (13) is started up in a predetermined direction of rotation in an at least virtually smooth manner, **characterised in that** the motor is supplied with sinusoidal motor currents by means of pulse-width modulation, and the microprocessor controller (11) is also set up to estimate the final standstill position from the previously detected dynamic angle change of the rotor (13) when the motor (3) is currentless and to record said standstill position as the rest position (RP) for the start of the subsequent rotational cycle.

5. Frequency converter (4) according to claim 4,
**characterised in that**
the detection device (15) comprises a potential divider which reduces the voltage of each individual phase (16u, 16v, 16w) to an input potential to be measured of an analogue-to-digital converter and forms a common reference potential together with the direct current intermediate circuit (7).

6. Frequency converter (4) according to claim 5,
**characterised in that**
the potential divider is configured for a fraction of the maximum voltage on a phase winding (16u, 16v, 16w).

7. Frequency converter (4) according to any of claims 4 to 6,
**characterised in that**
the detection device (15) comprises a device for converting the detected voltage signals (15b) in order to supply the signals converted to a data set to a downstream device (15c) for estimating the rotational speed and the angle of the rotor (13), a means (15d) also being set up to detect the rest state and the rest position (RP) of the rotor (13).

8. Frequency converter (4) according to claim 7,
**characterised in that**
the microprocessor controller (11) is set up to provide the conversion device and the device for estimating the rotational speed (n) and the rotor angle (W).

9. Frequency converter (4) according to claim 4,
**characterised by**
a non-volatile memory for storing the rest position (RP) of the rotor (13).

10. Frequency converter (4) having a microprocessor controller (11), comprising a program memory which contains a program for providing the functions and configuration of the frequency converter (4) according to any of claims 4 to 9.

11. Mechatronic system consisting of a brushless synchronous motor (3) for sinusoidal motor currents, comprising a rotor which is excited by permanent magnets and a frequency converter (4) according to any of claims 4 to 10 for operating the motor (3).

12. Washing machine (1) comprising a suds container (19) in which a substantially horizontally rotatable drum (18) is arranged and can be driven by means of an electric motor (3) and a drive system 2 comprising a drive belt, wherein the motor (3) is a brushless synchronous motor (3) for sinusoidal motor currents having a rotor (13) which is excited by permanent magnets, is actuated and supplied with current by means of a frequency converter (4) according to any of claims 4 to 10 and forms a mechatronic system according to claim 11, wherein the frequency converter (4) is connected to a program controller (10) by means of a data line (10a) so that the frequency converter (4) can receive control commands from the program controller (10).

13. Washing machine (1) comprising a suds container (19) in which a substantially horizontally rotatable drum (18) is arranged and can be driven by means of motor (3) which is designed as a direct drive means and the rotor of which can be connected directly to the drum shaft (18a), wherein the motor (3) is a brushless synchronous motor (3) for sinusoidal motor currents having a rotor (13) which is excited by permanent magnets, is actuated and supplied with current by means of a frequency converter (4) according to any of claims 4 to 10 and forms a mechatronic system according to claim 11, wherein the frequency converter (4) is connected to a program controller (10) by means of a data line (10a) so that the frequency converter (4) can receive control commands from the program controller (10).

## Revendications

1. Procédé destiné au fonctionnement d'un moteur synchrone (3), électrique, sans balais, biphasé ou multiphasé, avec un rotor (13) excité par des aimants permanents et destiné à l'entraînement d'un tambour (18) dans une machine à laver (1) ou dans un séchoir, dont les enroulements de phase (16u, 16v, 16w) du stator sont alimentés en courant au moyen d'un convertisseur de fréquence (4) ou d'un dispositif de commutation électronique, comprenant un onduleur (12) avec des demi-ponts (14u, 14v, 14w) commandés, qui sont alimentés à partir d'un circuit intermédiaire de tension continue (7), dans lequel la vitesse de rotation et la position du rotor (13) sont déterminées au moyen d'un système de détection (15) afin de piloter, respectivement d'alimenter en courant, chacun des enroulements (16u, 16v, 16w) en fonction des valeurs détectées, dans lequel les signaux de tension qui apparaissent du fait de l'action électromagnétique lors du mouvement du rotor (13) et qui sont générés par les enroulements du stator (16u, 16v, 16w) au moyen du système de détection (15) sont utilisés pour la détermination de la vitesse de rotation et pour la position du rotor (13) et cette valeur de la position (RP) enregistrée est utilisée pour le pilotage des demi-ponts (14u, 14v, 14w) en vue de la mise à disposition de courants destinés à l'alimentation en courant du moteur (3) lors du démarrage du cycle de rotation suivant, de telle sorte qu'un démarrage du rotor (13) se produit, tout au moins presque sans à-coup, dans une direction de rotation prédéterminée, **caractérisé en ce que** le moteur est alimenté en courant, par du courant sinusoïdal, au moyen d'une modulation de largeur d'impulsions et **en ce que** la position finale du rotor (13) à l'arrêt est estimée à l'aide de la variation angulaire dynamique du rotor (13) préalablement détectée, lorsque le moteur (3) est dépourvu de courant, et est enregistrée comme la position de repos (RP) et est utilisée lors du démarrage du cycle de rotation suivant.

2. Procédé selon la revendication 1,
**caractérisé en ce que** la position de repos (RP) du moteur (3) dépourvu de courant est détectée et enregistrée de manière continue.

3. Procédé selon la revendication 1,
**caractérisé en ce que** après le démarrage du cycle de rotation suivant, la position de repos (RP) précédemment enregistrée du rotor (13) est rejetée et est de nouveau détectée et enregistrée après une nouvelle mise hors tension.

4. Convertisseur de fréquence (4) destiné au fonctionnement d'un moteur synchrone (3), électrique, sans balais, biphasé ou multiphasé, avec un rotor (13) excité par des aimants permanents et destiné à l'entraînement d'un tambour (18) dans une machine à laver (1) ou dans un séchoir, en vue de l'alimentation en courant des enroulements de phase du stator (16u, 16v, 16w) du moteur (3), comprenant un onduleur (12) avec des demi-ponts (14u, 14v, 14w) commandés qui peuvent être alimentés à partir d'un circuit intermédiaire de tension continue (7), et comprenant également un système de détection (15) destiné à la détermination de la vitesse de rotation et de la position du rotor lorsque le moteur est à l'arrêt, et comprenant une commande à microprocesseur (11) qui est conçue pour piloter les demi-ponts (14u, 14v, 14w) en fonction des valeurs détectées, afin d'alimenter en courant chacun des enroulements (16u, 16v, 16w) pour le fonctionnement du moteur (3), dans lequel le système de détection (15) est agencé de manière à déterminer la vitesse de rotation et la position du rotor (13) à l'aide des signaux de tension induits sur la base des propriétés électromagnétiques du moteur (3) et de les retransmettre en tant que résultat à la commande à microprocesseur (11) qui est agencée de manière à utiliser cette valeur de la position (RP) enregistrée pour le pilotage des demi-ponts (14u, 14v, 14w) en vue de la mise à disposition de courants pour l'alimentation en courant du moteur (3) lors du démarrage du cycle de rotation suivant, pour un démarrage du rotor (13), tout au moins presque sans à-coup, dans une direction de rotation prédéterminée, **caractérisé en ce que** le moteur est alimenté en courant, par du courant sinusoïdal, au moyen d'une modulation de largeur d'impulsions et la commande à microprocesseur (11) est en outre agencée de manière à estimer la position finale du rotor (13) à l'arrêt à l'aide de la variation angulaire dynamique du rotor (13), préalablement détectée, lorsque le moteur (3) est dépourvu de courant, et de manière à l'enregistrer comme la position de repos (RP) pour le démarrage du cycle de rotation suivant.

5. Convertisseur de fréquence (4) selon la revendication 4,
**caractérisé en ce que**
le système de détection (15) comprend un diviseur de tension, qui réduit la tension de chacune des phases (16u, 16v, 16w) à un potentiel d'entrée à mesurer d'un convertisseur analogique / numérique et forme un potentiel de référence commun avec le circuit intermédiaire à tension continue (7).

6. Convertisseur de fréquence (4) selon la revendication 5,
**caractérisé en ce que**
le diviseur de tension est configuré pour une fraction de la tension maximale se produisant au niveau d'un enroulement de phase (16u, 16v, 16w).

7. Convertisseur de fréquence (4) selon l'une des revendications 4 à 6,
**caractérisé en ce que**
le système de détection (15) comprend un dispositif destiné à la transformation des signaux de tension (15b) saisis afin de mettre à disposition les signaux d'un dispositif (15c) installé en aval et destiné à l'évaluation de la vitesse de rotation et de l'angle du rotor (13), lesquels signaux sont transformés en un bloc de données, dans lequel un moyen (15d) est en outre agencé de manière à saisir l'état de repos et la position de repos (RP) du rotor (13).

8. Convertisseur de fréquence (4) selon la revendication 7,
**caractérisé en ce que**
la commande à microprocesseur (11) est agencée en vue de la mise à disposition du dispositif destiné à la transformation et du dispositif destiné à la vitesse de rotation (n) et de l'angle du rotor (W).

9. Convertisseur de fréquence (4) selon la revendication 4,
**caractérisé par**
une mémoire non volatile destinée à la mémorisation de la position de repos (RP) du rotor (13).

10. Convertisseur de fréquence (4) avec une commande à microprocesseur (11), comprenant une mémoire de programme, laquelle contient un programme destiné à la mise à disposition des fonctions et de la configuration du convertisseur de fréquence (4) selon l'une des revendications 4 à 9.

11. Système mécatronique, constitué d'un moteur synchrone (3) sans balais pour des courants sinusoïdaux de moteur, avec un rotor excité par des aimants permanents, et d'un convertisseur de fréquence (4) selon l'une des revendications 4 à 10, destinés au fonctionnement du moteur (3).

12. Machine à laver (1) comprenant une cuve à lessive (19), dans laquelle est disposé un tambour (18) dont la rotation s'effectue pour l'essentiel à l'horizontale, qui peut être entraîné à l'aide d'un moteur (3) électrique et d'un système d'entraînement 2 pourvu d'une courroie, dans laquelle le moteur (3) est un moteur synchrone (3) sans balais pour des courants sinusoïdaux de moteur, avec un rotor (13) excité par des aimants permanents, lequel est piloté et alimenté en courant par un convertisseur de fréquence (4) selon l'une des revendications 4 à 10, et forme un système mécatronique selon la revendication 11, dans laquelle le convertisseur de fréquence (4) est connecté à une commande par programme (10) par l'intermédiaire d'un câble de transmission de données (10a) afin que le convertisseur de fréquence (4) puisse recevoir des ordres de commande de la commande par programme (10).

13. Machine à laver (1) comprenant une cuve à lessive (19), dans laquelle est disposé un tambour (18) dont la rotation s'effectue pour l'essentiel à l'horizontale, qui peut être entraîné à l'aide d'un moteur (3) conçu comme un entraînement direct et dont le rotor est directement raccordé à l'arbre du tambour (18a), dans laquelle le moteur (3) est un moteur synchrone (3) sans balais pour des courants sinusoïdaux de moteur avec un rotor (13) excité par des aimants permanents, qui est piloté et alimenté en courant par un convertisseur de fréquence (4) selon l'une des revendications 4 à 10, et forme un système mécatronique selon la revendication 11, dans laquelle le convertisseur de fréquence (4) est connecté à une commande par programme (10) par l'intermédiaire d'un câble de transmission de données (10a) afin que le convertisseur de fréquence (4) puisse recevoir des ordres de commande de la commande par programme (10).
